# EUROPÄISCHE PATENTSCHRIFT

(11) **EP 3 702 478 B1**
(45) Veröffentlichungstag und Bekanntmachung des Hinweises auf die Patenterteilung: **13.01.2021**
(21) Anmeldenummer: 19159893.7
(22) Anmeldetag: 28.02.2019
(51) Int. Cl.: C22B 3/00

(54) **VERFAHREN ZUM AUFSCHLUSS EINES RUTHENIUM UMFASSENDEN GEMISCHS VON FESTSTOFFPARTIKELN**
METHOD FOR DECOMPOSITION OF A RUTHENIUM-CONTAINING MIXTURE OF SOLID PARTICLES
PROCÉDÉ DE DÉCOMPOSITION D'UN MÉLANGE DE PARTICULES SOLIDES COMPORTANT DU RUTHÉNIUM

(43) Veröffentlichungstag der Anmeldung: 02.09.2020
(73) Patentinhaber: Heraeus Deutschland GmbH & Co KG, 63450 Hanau (DE)
(72) Erfinder: STETTNER, Martin, 63450 Hanau (DE); GÜNTHER, Magdalena, 63450 Hanau (DE); KRÖCKEL, Sophia, 63450 Hanau (DE)

(56) Entgegenhaltungen:
- DD-A1- 261 811
- JP-A- 2009 057 611

## Beschreibung

Die vorliegende Erfindung betrifft ein Verfahren zum Aufschluss eines Ruthenium umfassenden Gemischs von Feststoffpartikeln. Ziel des Verfahrens ist der möglichst vollständige Aufschluss des Rutheniums und die Gewinnung einer wässrigen Lösung, die eine weitere Aufreinigung und Gewinnung von Ruthenium oder Rutheniumverbindungen erlaubt.

Die Erfindung betrifft ein Verfahren zum Aufschluss eines in Form von Feststoffpartikeln vorliegenden Gemischs bestehend aus:
(A) 0 bis 99 Gew.-% (Gewichts-%) metallischen Rutheniums,
(B) 0 bis 50 Gew.-% mindestens eines von Ruthenium verschiedenen, in Elementform vorliegenden Elements ausgewählt aus der Gruppe der Elemente der Ordnungszahlen 13, 21-30, 39-42, 45-52 und 72-83,
(C) 0 bis 99 Gew.-% Rutheniumoxid,
(D) 0 bis 70 Gew.-% mindestens eines von Rutheniumoxid verschiedenen festen Elementoxids,
(E) 0 bis 30 Gew.-% mindestens einer von (A) bis (D) verschiedenen anorganischen Substanz, und
(F) 0 bis 3 Gew.-% mindestens einer organischen Substanz,
wobei die Summe der Gew.-% der Bestandteile (A) bis (F) 100 Gew.-% und der Rutheniumgehalt des Gemischs 2 bis 99 Gew.-% beträgt.

Der Rutheniumgehalt des Gemischs kann den Bestandteilen (A), (C), (E), jeweils alleine, insbesondere aber einer Kombination (A) plus (C) plus (E) oder (A) plus (C) oder (A) plus (E) oder (C) plus (E) entstammen.

Das im erfindungsgemäßen Verfahren aufzuschließende, in Form von Feststoffpartikeln vorliegende Gemisch kann verschiedenen Quellen entstammen. Es kann sich beispielsweise um ein Erzkonzentrat oder ein Gemisch mehrerer verschiedener Erzkonzentrate aus einer Erzaufbereitung und/oder um einen Rückstand oder ein Gemisch mehrerer verschiedener jeweils Ruthenium enthaltender Rückstände aus einer Edelmetallaufbereitung handeln.

Metallisches Ruthenium des Bestandteils (A) und/oder das mindestens eine von Ruthenium verschiedene, in Elementform vorliegende aus der Gruppe der Elemente der Ordnungszahlen 13, 21-30, 39-42, 45-52 und 72-83 ausgewählte Element (B) kann/können als Legierungsbestandteil vorliegen.

Bei dem oder den festen Elementoxiden des Bestandteils (D) handelt es sich insbesondere um ein oder mehrere Oxide der Elemente des Bestandteils (B), Alkalimetalloxide und/oder Erdalkalimetalloxide. Um Missverständnisse auszuschließen, Peroxide oder Superoxide dieser Elemente sind ausgeschlossen. Die Elemente der Elementoxide des Bestandteils (D) können im Allgemeinen Oxidationsstufen im Bereich von +1 bis +4 aufweisen. Bestandteil (D) umfasst keine festen Elementoxide, die befähigt sind, Ruthenium aus niedrigeren Oxidationsstufen in die Oxidationsstufe +6 zu befördern.

Die mindestens eine von den Bestandteilen (A) bis (D) verschiedene anorganische Substanz des Bestandteils (E) umfasst insbesondere weder (i) deutlich sauer reagierende Substanzen wie beispielsweise Säuren, saure Salze, Säureanhydride wie beispielsweise Phosphorpentoxid, oder dergleichen, noch (ii) mittels Sauerstoff unter den Aufschlussbedingungen des nacherwähnten Verfahrensschritts (2) unter Feuererscheinung oder gar Explosion oxidierbare Substanzen. Die mindestens eine von den Bestandteilen (A) bis (D) verschiedene anorganische Substanz des Bestandteils (E) kann insbesondere ausgewählt sein aus der Gruppe bestehend aus (i) Siliziumdioxid, (ii) aus gegebenenfalls als Komplex vorliegenden Kationen und aus der aus Silikaten, Sulfiden, Phosphiden, Sulfiten, Phosphiten, Sulfaten, Phosphaten, Arsenaten, Antimonaten, Selenaten und Metallaten bestehenden Gruppe ausgewählten Anionen gebildeten Salzen, (iii) von (i) und (ii) verschiedenen Oxo-, Schwefel- und/oder Phosphorverbindungen eines oder mehrerer Metalle der Ordnungszahlen 13, 21-30, 39-50, 72-83 und (iv) Kohlenstoff, beispielsweise Russ oder Graphit. Es handelt sich bei den anorganischen Substanzen des Bestandteils (E) im Wesentlichen um Feststoffe, d.h. der Bestandteil (E) besteht zu 95 bis 100 Gew.-%, bevorzugt zu 99 bis 100 Gew.-%, insbesondere vollständig aus Feststoffen. Bestandteil (E) umfasst keine Substanzen, die befähigt sind, Ruthenium aus niedrigeren Oxidationsstufen in die Oxidationsstufe +6 zu befördern.

Bevorzugt umfasst das im erfindungsgemäßen Verfahren aufzuschließende Gemisch keinen Bestandteil (F). Es kann jedoch sein, dass es > 0 bis 3 Gew.-% Bestandteil (F) enthält, dann jedoch im Allgemeinen technisch bedingt und insofern unvermeidbar.

Visuell betrachtet ist das im erfindungsgemäßen Verfahren aufzuschließende Gemisch praktisch homogen, nicht zuletzt als Folge geringer Teilchengrößen der das Gemisch ausmachenden Feststoffpartikel.

Die absoluten Teilchengrößen der Feststoffpartikel können im Wesentlichen im Mikrometerbereich von beispielsweise bis zu 500 µm liegen. Die einzelnen oder einzelne Feststoffpartikel können dabei einen oder mehrere der Bestandteile (A) bis (F) umfassen.

In einer Ausführungsform zeichnet sich das im erfindungsgemäßen Verfahren aufzuschließende Gemisch durch eine Teilchengröße D10 im Bereich von 0,5 bis 1 µm und eine Teilchengröße D50 im Bereich von 2 bis 10 µm der es ausmachenden Feststoffpartikel aus.

Die dem Fachmann bekannten Teilchengrößen D10 und D50 können mittels Laserbeugung bestimmt werden, beispielsweise mittels eines entsprechenden Teilchengrößenmessgeräts, beispielsweise mit einem Mastersizer 3000 von Malvern Instruments.

Aus EP 2 090 669 A2, EP 2 236 633 A1 und EP 2 348 137 A1 ist jeweils ein alkalisch oxidierender Aufschluss Ruthenium-haltiger Feststoffgemische in einer Alkalinitrat/Kaliumhydroxid-Schmelze bekannt Verfahren zum Aufschluss von Feststoffen enthaltend metallisches Ruthenium und/oder Rutheniumverbindungen durch Einbringen in Kaliumhydroxidschmelzen, welche keine weiteren Oxidationsmittel enthalten, sind aus der JP 2009 057611 A und der DD 261 811 A1 bekannt.

Die Anmelderin konnte nunmehr für sie selber überraschend feststellen, dass ein alkalisch oxidierender Aufschluss Ruthenium-haltiger Feststoffgemische in geschmolzenem Kaliumhydroxid auch ohne Anwesenheit von Nitrat gelingt. Vorteilhaft ist dabei nicht nur die Einsparung von vergleichsweise teurem Nitrat. Vielmehr ergeben sich auch die in folgender nicht erschöpfender Liste dargestellten Vorteile:
- Bessere Auslastung von Reaktor oder Reaktionsbehältnis, in dem die alkalisch oxidierende Schmelze stattfindet, aufgrund Wegfalls des sonst durch Nitrat beanspruchten Reaktorvolumens.
- Kein Nitratabwasser bei der weiteren Aufarbeitung des Aufschlussmaterials bzw. keine Notwendigkeit einer Auswaschung von NOx-Abgas aus einer letzteres mit sich bringenden Nitratverkochung.
- Vereinfachte weitere Edelmetallraffination, falls das rutheniumhaltige Feststoffpartikel-Ausgangsmaterial weitere Edelmetalle wie Platin und/oder Iridium enthält.

Das erfindungsgemäße Verfahren umfasst die Schritte:
(1) gegebenenfalls Vermengen besagten Gemischs mit Alkalicarbonat unter Bildung eines Gemenges,
(2) alkalisch oxidierendes Aufschließen des Gemischs respektive des im optionalen Schritt (1) gebildeten Gemenges in geschmolzenem Kaliumhydroxid unter Verwendung eines gasförmigen Oxidationsmittels ausgewählt aus der Gruppe bestehend aus Luft, Sauerstoff und Luft/Sauerstoff-Gemischen und ohne Verwendung von Nitrat, und
(3) Abkühlen des in Schritt (2) gebildeten Aufschlussmaterials auf eine Temperatur unterhalb seiner Erstarrungstemperatur,
wobei das gasförmige Oxidationsmittel in Schritt (2) in die Schmelze eingeleitet wird.

In der weiteren Folge wird anstelle des Ausdrucks "Gasförmiges Oxidationsmittel ausgewählt aus der Gruppe bestehend aus Luft, Sauerstoff und Luft/Sauerstoff-Gemischen" der Kürze halber auch der Ausdruck "Gasförmiges Oxidationsmittel" verwendet. Sauerstoff ist als gasförmiges Oxidationsmittel bevorzugt.

Ein erfindungswesentliches Merkmal des erfindungsgemäßen Verfahrens ist es, dass das gasförmige Oxidationsmittel in Schritt (2) in die Schmelze eingeleitet wird. Die Schmelze umfasst das geschmolzene Kaliumhydroxid, genauer gesagt umfasst die Schmelze zu Beginn von Schritt (2) nur das geschmolzene Kaliumhydroxid, während im Verlaufe von Schritt (2) geschmolzene und/oder in der Schmelzphase dispergierte Bestandteile des Gemischs respektive des Gemenges sowie unter den herrschenden alkalisch oxidativen Bedingungen sich bildende ebenfalls geschmolzene und/oder in der Schmelze dispergierte Reaktionsprodukte hinzukommen. Dabei können geschmolzene Bestandteile des Gemischs respektive des Gemenges sowie geschmolzene Reaktionsprodukte in dem geschmolzenen Kaliumhydroxid supendiert und/oder gelöst vorkommen.

In einer Ausführungsform umfasst das erfindungsgemäße Verfahren demnach die Schritte:
(1) Vermengen besagten Gemischs mit Alkalicarbonat unter Bildung eines Gemenges,
(2) alkalisch oxidierendes Aufschließen des gebildeten Gemenges in geschmolzenem Kaliumhydroxid unter Verwendung eines der besagten gasförmigen Oxidationsmittel und ohne Verwendung von Nitrat, und
(3) Abkühlen des in Schritt (2) gebildeten Aufschlussmaterials auf eine Temperatur unterhalb seiner Erstarrungstemperatur,
wobei das gasförmige Oxidationsmittel in Schritt (2) in die Schmelze eingeleitet wird.

In einer anderen Ausführungsform umfasst das erfindungsgemäße Verfahren die Schritte:
(2) alkalisch oxidierendes Aufschließen besagten Gemischs in geschmolzenem Kaliumhydroxid unter Verwendung eines der besagten gasförmigen Oxidationsmittel und ohne Verwendung von Nitrat, und
(3) Abkühlen des in Schritt (2) gebildeten Aufschlussmaterials auf eine Temperatur unterhalb seiner Erstarrungstemperatur,
wobei das gasförmige Oxidationsmittel in Schritt (2) in die Schmelze eingeleitet wird.

Hierin wird zwischen dem eingangs erwähnten Gemisch und, sofern der optionale Schritt (1) verwirklicht wird, dem in Schritt (1) durch Vermengen besagten Gemischs mit Alkalicarbonat gebildeten Gemenge unterschieden.

Verfahrensschritt (1) ist optional, die Verfahrensschritte (2) und (3) hingegen finden zwingend statt.

Im optionalen Schritt (1) des erfindungsgemäßen Verfahrens kann durch Vermengen des Gemischs mit Alkalicarbonat ein Gemenge aus Gemisch und Alkalicarbonat gebildet werden, beispielsweise in einem Gewichtsverhältnis von 1 Gewichtsteil Gemisch : 0,05 bis 0,5 Gewichtsteilen Alkalicarbonat. Das Alkalicarbonat kann in dem Gemisch angepasster Teilchengröße, beispielsweise in Pulverform verwendet werden. Als Alkalicarbonat kann Natriumcarbonat und/oder Kaliumcarbonat verwendet werden; bevorzugt wird Natriumcarbonat verwendet. Für den Fachmann bedarf es keiner näheren Erläuterung, dass auch das Gemenge visuell betrachtet praktisch homogen ist, nicht zuletzt als Folge der geringen Teilchengrößen der das Gemenge ausmachenden Feststoffpartikel.

Die Durchführung des an sich optionalen Schrittes (1) hat sich als zweckmäßig erwiesen, speziell bei Durchführung des Verfahrens im technischen Maßstab, also beispielsweise bei Ansatzgrößen von 20 und mehr kg, beispielsweise 20 bis 1000 kg aufzuschließenden Gemischs.

In Schritt (2) wird das Gemisch oder, falls der an sich optionale Schritt (1) verwirklicht wurde, das Gemenge in geschmolzenem Kaliumhydroxid unter Verwendung eines der besagten gasförmigen Oxidationsmittel und ohne Verwendung von Nitrat alkalisch oxidierend aufgeschlossen. "Verwendung eines der besagten gasförmigen Oxidationsmittel" bedeutet Einleiten desselben in die Schmelze. "Ohne Verwendung von Nitrat" bedeutet ohne Zusatz von Nitrat.

Neben dem gasförmigen Oxidationsmittel wird in Schritt (2) kein Nitrat verwendet oder zugesetzt. Bevorzugt wird neben dem gasförmigen Oxidationsmittel auch kein von Nitrat verschiedenes Oxidationsmittel verwendet oder zugesetzt, insbesondere kein zur Beförderung von Ruthenium aus niedrigeren Oxidationsstufen in die Oxidationsstufe +6 befähigtes Oxidationsmittel.

Das in Schritt (2) des erfindungsgemäßen Verfahrens zur Anwendung kommende Gewichtsverhältnis von aufzuschließendem Gemisch und Kaliumhydroxid kann beispielsweise 1 Gewichtsteil Gemisch : 2 bis 5 Gewichtsteilen geschmolzenem Kaliumhydroxid betragen; dieses Gewichtsverhältnis von aufzuschließendem Gemisch und Kaliumhydroxid gilt auch beim Arbeiten mit einem gemäß Schritt (1) gebildeten, das Gemisch umfassenden Gemenge.

Bevorzugt werden in Schritt (2) des erfindungsgemäßen Verfahrens neben dem aufzuschließenden Gemisch respektive dem Gemenge (aus aufzuschließendem Gemisch und Alkalicarbonat), Kaliumhydroxid und dem gasförmigen Oxidationsmittel keine weiteren Substanzen verwendet oder zugesetzt.

Naturgemäß umfasst Schritt (2) des erfindungsgemäßen Verfahrens das Inkontaktbringen des Gemischs respektive des Gemenges mit geschmolzenem Kaliumhydroxid. Bevorzugt geschieht das Inkontaktbringen durch Zugabe des Gemischs respektive des Gemenges in eine zuvor hergestellte Kaliumhydroxidschmelze. Die Kaliumhydroxidschmelze kann während der Zugabe des Gemischs respektive des Gemenges eine Temperatur beispielsweise im Bereich von 400 bis 800 °C oder sogar 500 bis 800 °C aufweisen. Die Zugabe zur Kaliumhydroxidschmelze kann während eines Zeitraumes von beispielsweise bis zu 2 bis 5 Stunden erfolgen, kontinuierlich oder in mehreren Portionen. Die Zugabegeschwindigkeit, genauer gesagt, die durchschnittliche Zugabegeschwindigkeit kann beispielsweise 0,04 bis 0,25 kg des Gemischs respektive des Gemenges pro Stunde und pro kg geschmolzenen Kaliumhydroxids betragen. Nach beendeter Zugabe kann das entstandene geschmolzene Material zweckmäßigerweise weiter durchmischt, insbesondere weiter gerührt werden, beispielsweise bei einer Temperatur im Bereich von 500 bis 800 °C oder sogar 600 bis 800 °C. Dazu kann es notwendig sein, die Temperatur gegenüber der Temperatur während der Zugabe zur Kaliumhydroxidschmelze entsprechend zu erhöhen. Das weitere Durchmischen kann beispielsweise einen Zeitraum von 1 bis 5 Stunden umfassen.

Das gasförmige Oxidationsmittel wird in Schritt (2) in die Schmelze eingeleitet. Bevorzugt wird das gasförmige Oxidationsmittel unterhalb der Oberfläche der Schmelze eingeleitet, insbesondere durch Einblasen. Das Einleiten kann unter Verwendung dazu geeigneter Mittel wie beispielsweise eines Gaseinleitungsrohrs und/oder eines Begasungsrührers stattfinden und/oder die Schmelze befindet sich in einem Behälter oder Reaktor mit einer oder mehreren Gaseinleitungseinrichtungen im Boden und/oder in der Wandung. Dabei können der feinen Verteilung des gasförmigen Oxidationsmittels dienliche Ausströmvorrichtungen verwendet werden, beispielsweise Siebböden, Lochplatten oder dergleichen. Die mit der Schmelze in Berührung kommenden Gerätschaften bzw. Oberflächen bestehen zweckmäßigerweise aus bei hoher Temperatur alkalifestem Material wie beispielsweise Edelstahl.

Mit dem Einleiten des gasförmigen Oxidationsmittels kann begonnen werden, sobald die Kaliumhydroxidschmelze gebildet worden ist oder jederzeit später innerhalb von Schritt (2), also während oder nach Zugabe des Gemischs respektive des Gemenges in die zuvor bereitete Kaliumhydroxidschmelze. Es werden beispielsweise im Bereich von 200 bis 600 Liter des gasförmigen Oxidationsmittels pro Kilogramm geschmolzenen Kaliumhydroxids eingeleitet, beispielsweise während eines Zeitraumes im Bereich von 3 bis 5 Stunden. Bevorzugt erfolgt das Einleiten mit einem gleichmäßigen Volumenstrom.

Am Ende von Schritt (2) erhält man ein Aufschlussmaterial in Form einer Schmelze, die Ruthenat (RuO₄²⁻) enthält.

Nach Beendigung von Schritt (2) wird das gebildete Aufschlussmaterial im sich anschließenden Schritt (3) auf eine Temperatur unterhalb der Erstarrungstemperatur abgekühlt, beispielsweise auf eine Temperatur im Bereich von 10 bis 70 °C. Es kann zweckmäßig sein, das Aufschlussmaterial noch als Schmelze in ein oder mehrere Behältnisse zu verbringen, in dem/denen ein gegebenenfalls nachfolgender Verfahrensschritt (4) stattfindet, und das Abkühlen darin erfolgen zu lassen. Der Abkühlvorgang erfolgt üblicherweise passiv ohne unterstützende Kühlung.

Ein zweckmäßiger Verfahrensschritt (4) kann insbesondere das Lösen des nach Beendigung von Schritt (3) abgekühlten und erstarrten Aufschlussmaterials in Wasser umfassen oder daraus bestehen. Zweckmäßig kann dabei beispielsweise so vorgegangen werden, dass man das Aufschlussmaterial in Wasser aufnimmt oder Wasser zum Aufschlussmaterial gibt. Beispielsweise kann dabei ein im Bereich von 1 : 1-5 liegendes Gewichtsverhältnis von Aufschlussmaterial : Wasser zur Anwendung kommen. Zweckmäßigerweise wird das Aufschlussmaterial in der wässrigen Phase suspendiert, beispielsweise durch Rühren.

Nach Beendigung von Schritt (4) kann sich bei Bedarf ein Schritt (5) des Abtrennens eventueller wasserunlöslicher Bestandteile des Aufschlussmaterials aus der wässrigen Lösung anschließen. Sollte also die in Schritt (4) erhaltene wässrige Lösung geringe Anteile solcher wasserunlöslicher Bestandteile enthalten, beispielsweise in einer auf das Aufschlussmaterial bezogenen Größenordnung von bis zu 10 Gew.-%, so können diese Bestandteile in diesem optionalen Verfahrensschritt (5) abgetrennt werden. Dabei können übliche dem Fachmann bekannte Fest-Flüssig-Trennverfahren eingesetzt werden, beispielsweise Dekantieren, Abhebern, Abfiltrieren oder geeignete Kombinationen solcher Trennverfahren.

Die in Schritt (4) respektive (5) erhaltene wässrige Lösung enthält gelöstes Ruthenat (RuO₄²⁻) und sie kann nach üblichen dem Fachmann bekannten Methoden, beispielsweise in den vorerwähnten EP 2 090 669 A2, EP 2 236 633 A1 und EP 2 348 137 A1 offenbarten Methoden, weiterverarbeitet werden. Beispielsweise kann die wässrige Lösung einer Behandlung mit einem geeigneten Reduktionsmittel beispielsweise ausgewählt aus der Gruppe bestehend aus Glucose, primären wasserlöslichen Alkoholen und sekundären wasserlöslichen Alkoholen unterworfen werden, um RuO₂ aus der wässrigen Lösung auszufällen.

Das erfindungsgemäße Verfahren zeichnet sich aus durch eine ausgezeichnete Rutheniumaktivierung (Rutheniumaufschlussrate). Beispielsweise liegt die Wiederfindungsrate des Rutheniums als Ruthenat in der wässrigen Lösung regelmäßig bei mindestens 90% bis zu >99 %, bezogen auf das im in Schritt (2) eingesetzten Gemisch respektive Gemenge enthaltene Ruthenium. Mit anderen Worten, das erfindungsgemäße Verfahren erlaubt einen nahezu bis zu vollständigen Aufschluss von Ruthenium in Gemischen respektive Gemengen der vorerwähnten Art im Hinblick auf die Überführung darin enthaltenen Rutheniums in wasserlösliches Ruthenat.

### Beispiele

### Beispiel 1:

In einem Schmelztiegel wurden 400 kg Kaliumhydroxid vorgelegt und bei 550 °C aufgeschmolzen. Unter Rühren wurden über einen Zeitraum von 3,5 Stunden 130 kg eines Erzkonzentrats in Form eines Gemischs aus Feststoffpartikeln (D10 = 0,47 µm, D50 = 8,55 µm; Zusammensetzung gemäß Röntgenfluoreszenzanalyse (RFA), jeweils in Gew.-%: 6% Ru, 26% Pt, 12% Pd, 4% Rh, 1% Ir, 3% Se, 3% Fe) zugegeben. Danach wurde die Temperatur auf 620 °C erhöht und unter fortwährendem Rühren über einen Zeitraum von 5 Stunden gehalten. Währenddessen wurden 152 Kubikmeter Sauerstoff mittels einer in die Schmelze eingetauchten Edelstahl-Gaslanze in die Schmelze eingeleitet. Anschließend wurde die Schmelze in Schmelzwannen ausgegossen. Nach dem Abkühlen auf 20 °C wurde die erstarrte Schmelze mit insgesamt 600 Litern Wasser versetzt und 5 Stunden aufsuspendiert. Die erhaltene wässrige Suspension wurde absetzen gelassen und die dabei erhaltene überstehende wässrige Lösung wurde abdekantiert und analysiert.

Die Wiederfindungsrate für Ruthenium betrug 98 % (errechnet aus dem mittels induktiv gekoppelter Plasmaemission (ICP) bestimmten Rutheniumgehalt der wässrigen Lösung unter Bezug auf das eingesetzte Gemisch).

### Beispiel 2:

25 g Kaliumhydroxid wurden in einem Tiegel bei 570 °C aufgeschmolzen. Unter Rühren wurde ein Gemisch aus 10 g Ru-Pulver und 0,5 g RuO₂-Pulver portionsweise unter Rühren eingetragen. Anschließend wurde bei 570 °C für 5 Stunden weiter gerührt begleitet von einem vierstündigen Einleiten von insgesamt 12 Litern Sauerstoff über ein Edelstahl-Gaseinleitungsrohr in die Schmelze. Dann wurde abkühlen gelassen. Nach Erkalten der Schmelze wurde der Rückstand in 150 ml Wasser gelöst und anschließend filtriert. Der Löserückstand wurde getrocknet und ausgewogen (0,01 g). Die wässrige Lösung wurde analysiert.

Die Wiederfindungsrate für das Ruthenium betrug 98,79 % (errechnet aus dem mittels ICP bestimmten Rutheniumgehalt der wässrigen Lösung unter Bezug auf das eingesetzte Gemisch).

## Patentansprüche

1. Verfahren zum Aufschluss eines in Form von Feststoffpartikeln vorliegenden Gemischs bestehend aus:
(A) 0 bis 99 Gew.-% metallischen Rutheniums,
(B) 0 bis 50 Gew.-% mindestens eines von Ruthenium verschiedenen, in Elementform vorliegenden Elements ausgewählt aus der Gruppe der Elemente der Ordnungszahlen 13, 21-30, 39-42, 45-52 und 72-83,
(C) 0 bis 99 Gew.-% Rutheniumoxid,
(D) 0 bis 70 Gew.-% mindestens eines von Rutheniumoxid verschiedenen festen Elementoxids,
(E) 0 bis 30 Gew.-% mindestens einer von (A) bis (D) verschiedenen anorganischen Substanz, und
(F) 0 bis 3 Gew.-% mindestens einer organischen Substanz,
wobei die Summe der Gew.-% der Bestandteile (A) bis (F) 100 Gew.-% und der Rutheniumgehalt des Gemischs 2 bis 99 Gew.-% beträgt, und
wobei das Verfahren die Schritte umfasst:
(1) gegebenenfalls Vermengen besagten Gemischs mit Alkalicarbonat unter Bildung eines Gemenges,
(2) alkalisch oxidierendes Aufschließen des Gemischs respektive des im optionalen Schritt (1) gebildeten Gemenges in geschmolzenem Kaliumhydroxid unter Verwendung eines gasförmigen Oxidationsmittels ausgewählt aus der Gruppe bestehend aus Luft, Sauerstoff und Luft/Sauerstoff-Gemischen und ohne Verwendung von Nitrat, und
(3) Abkühlen des in Schritt (2) gebildeten Aufschlussmaterials auf eine Temperatur unterhalb seiner Erstarrungstemperatur,
**dadurch gekennzeichnet, dass** das gasförmige Oxidationsmittel in Schritt (2) in die Schmelze eingeleitet wird.

2. Verfahren nach Anspruch 1, wobei Schritt (1) mit einer Menge von 20 bis 1000 kg des Gemischs verwirklicht wird.

3. Verfahren nach Anspruch 1 oder 2, wobei Schritt (1) mit einem Gewichtsverhältnis von 1 Gewichtsteil Gemisch : 0,05 bis 0,5 Gewichtsteilen Alkalicarbonat verwirklicht wird.

4. Verfahren nach einem der vorhergehenden Ansprüche, wobei es sich bei dem aufzuschließenden Gemisch um ein Erzkonzentrat oder um ein Gemisch mehrerer verschiedener Erzkonzentrate aus einer Erzaufbereitung und/oder um einen Rückstand oder ein Gemisch mehrerer verschiedener jeweils Ruthenium enthaltender Rückstände aus einer Edelmetallaufbereitung handelt.

5. Verfahren nach einem der vorhergehenden Ansprüche, wobei sich das aufzuschließende Gemisch durch mittels Laserbeugung bestimmte Teilchengrößen D10 im Bereich von 0,5 bis 1 µm und D50 im Bereich von 2 bis 10 µm seiner es ausmachenden Feststoffpartikel auszeichnet.

6. Verfahren nach einem der vorhergehenden Ansprüche, wobei neben dem gasförmigen Oxidationsmittel auch kein von Nitrat verschiedenes Oxidationsmittel verwendet oder zugesetzt wird.

7. Verfahren nach einem der vorhergehenden Ansprüche, wobei das in Schritt (2) zur Anwendung kommende Gewichtsverhältnis von aufzuschließendem Gemisch und geschmolzenem Kaliumhydroxid 1 : 2 bis 1 : 5 beträgt.

8. Verfahren nach einem der vorhergehenden Ansprüche, wobei in Schritt (2) neben dem aufzuschließenden Gemisch respektive dem Gemenge, Kaliumhydroxid und dem gasförmigen Oxidationsmittel keine weiteren Substanzen verwendet oder zugesetzt werden.

9. Verfahren nach einem der vorhergehenden Ansprüche, wobei Schritt (2) die Zugabe des aufzuschließenden Gemischs respektive des Gemenges in eine zuvor hergestellte Kaliumhydroxidschmelze umfasst.

10. Verfahren nach Anspruch 9, wobei die Kaliumhydroxidschmelze während der Zugabe eine Temperatur im Bereich von 400 bis 800 °C aufweist.

11. Verfahren nach Anspruch 9 oder 10, wobei das nach beendeter Zugabe entstandene geschmolzene Material weiter durchmischt wird.

12. Verfahren nach einem der vorhergehenden Ansprüche, wobei sich nach Beendigung von Schritt (3) ein Schritt (4) umfassend das Lösen des abgekühlten und erstarrten Aufschlussmaterials in Wasser anschließt.

## Claims

1. A method for the digestion of a mix that is present in the form of solid particles and consists of:
(A) 0 to 99 w/w per cent of metallic ruthenium;
(B) 0 to 50 w/w per cent of at least one element that is present in element form and is different from ruthenium, the element being selected from the group of elements of atomic numbers 13, 21-30, 39-42, 45-52, and 72-83;
(C) 0 to 99 w/w per cent of ruthenium oxide;
(D) 0 to 70 w/w per cent of at least one solid element oxide that is different from ruthenium oxide;
(E) 0 to 30 w/w per cent of at least one inorganic substance that is different from (A) to (D); and
(F) 0 to 3 w/w per cent of at least one organic substance;
wherein the sum total of the w/w per cent of ingredients (A) to (F) is 100 w/w percent and the content of ruthenium in the mix is 2 to 99 w/w per cent; and
wherein the method comprises the steps of:
(1) where appropriate, mixing said mix with alkali carbonate to form a solids mixture,
(2) digesting the mix or the solids mixture formed in optional step (1), respectively, in molten potassium hydroxide under alkaline oxidisation, using a gaseous oxidising agent selected from the group consisting of air, oxygen and air-oxygen mixtures and without the use of nitrate, and
(3) cooling the digestion material formed in step (2) to a temperature below its solidification temperature,
**characterised in that** the gaseous oxidation agent is introduced into the melt in step (2).

2. The method according to claim 1, wherein step (1) is carried out using an amount of 20 to 1000 kg of the mix.

3. The method according to claim 1 or 2, wherein step (1) is carried out using a weight ratio of 1 part by weight of the mix : 0.05 to 0.5 parts by weight of alkali carbonate.

4. The method according to any one of the preceding claims, wherein the mix to be digested is an ore concentrate, or a mix of several different ore concentrates from an ore dressing process, and/or a residue or a mix of several different residues from a noble metal dressing process, the residues each containing ruthenium.

5. The method according to any one of the preceding claims, wherein the mix to be digested is **characterised by** D10 particle sizes within the range from 0.5 to 1 µm and D50 particles sizes within the range from 2 to 10 µm of the solid particles constituting the mix, the particles sizes being determined by laser diffraction.

6. The method according to any one of the preceding claims, wherein - apart from the gaseous oxidation agent - no oxidation agent differing from nitrate is used or admixed either.

7. The method according to any one of the preceding claims, wherein the weight ratio of the mix to be digested to the molten potassium hydroxide used in step (2) is 1 : 2 to 1: 5.

8. The method according to any one of the preceding claims, wherein - apart from the mix or the solids mixture, respectively, to be digested, the potassium hydroxide and the gaseous oxidation agent - no other substances are used or admixed in step (2).

9. The method according to any one of the preceding claims, wherein step (2) comprises the addition of the mix or solids mixture, respectively, to be digested into a potassium hydroxide melt that was produced beforehand.

10. The method according to claim 9, wherein the potassium hydroxide melt has a temperature within the range from 400 to 800 °C while the addition is made.

11. The method according to claim 9 or 10, wherein the molten material produced after the addition has been completed is intermixed further.

12. The method according to any one of the preceding claims, wherein step (3), when completed, is followed by a step (4) which comprises the dissolution of the cooled and solidified digestion material in water.

## Revendications

1. Procédé de traitement d'un mélange homogène présent sous forme de particules solides, composé de :
(A) 0 à 99% en poids de ruthénium métallique,
(B) 0 à 50% en poids au moins d'un élément présent sous forme d'élément, différent du ruthénium, sélectionné dans le groupe des éléments des numéros atomiques 13, 21-30, 39-42, 45-52 et 72-83,
(C) 0 à 99% en poids d'oxyde de ruthénium,
(D) 0 à 70% en poids au moins d'un oxyde d'élément solide différent de l'oxyde de ruthénium,
(E) 0 à 30% en poids au moins d'une substance inorganique différente de (A) à (D), et
(F) 0 à 3% en poids au moins d'une substance organique,
la somme des % en poids des composants (A) à (F) s'élevant à 100% en poids et la teneur en ruthénium du mélange homogène étant comprise entre 2 et 99% en poids et
le procédé comprenant les étapes suivantes :
(1) le cas échéant, mélange dudit mélange homogène avec du carbonate alcalin pour former un mélange hétérogène,
(2) traitement oxydant alcalin du mélange homogène et/ou du mélange hétérogène formé dans l'étape (1) facultative dans de l'hydroxyde de potassium fondu avec l'utilisation d'un oxydant gazeux sélectionné dans le groupe se composant d'air, d'oxygène et de mélanges air/oxygène et sans l'utilisation de nitrate et
(3) refroidissement du produit de traitement formé dans l'étape (2) à une température en dessous de sa température de solidification,
**caractérisé en ce que**
l'oxydant gazeux dans l'étape (2) est introduit dans la matière en fusion.

2. Procédé conformément à la revendication 1, l'étape (1) étant réalisée avec une quantité de 20 à 1000 kg du mélange homogène.

3. Procédé conformément à la revendication 1 ou 2, l'étape (1) étant réalisée avec un rapport de poids de 1 partie en poids de mélange homogène : 0,05 à 0,5 partie en poids de carbonate alcalin.

4. Procédé conformément à l'une des revendications précédentes, le mélange homogène à traiter étant un concentré de minerai ou un mélange homogène de plusieurs concentrés de minerais différents, issus d'un traitement de minerais, et/ou un résidu ou un mélange homogène de plusieurs résidus différents contenant respectivement du ruthénium, issus d'un traitement de métaux nobles.

5. Procédé conformément à l'une des revendications précédentes, le mélange homogène à traiter étant **caractérisé par** des tailles de particules déterminées par diffraction laser, D10 de l'ordre de 0,5 à 1 µm et D50 de l'ordre de 2 à 10 µm des particules solides le constituant.

6. Procédé conformément à l'une des revendications précédentes, aucun oxydant différent du nitrate n'étant utilisé ou ajouté, outre l'oxydant gazeux.

7. Procédé conformément à l'une des revendications précédentes, le rapport de poids entre le mélange homogène à traiter et l'hydroxyde de potassium fondu, utilisé dans l'étape (2), étant compris entre 1:2 et 1:5.

8. Procédé conformément à l'une des revendications précédentes, aucune autre substance n'étant utilisée ou ajoutée dans l'étape (2), outre le mélange homogène à traiter et/ou le mélange hétérogène, l'hydroxyde de potassium et l'agent gazeux.

9. Procédé conformément à l'une des revendications précédentes, l'étape (2) comprenant l'ajout du mélange homogène à traiter et/ou du mélange hétérogène dans une fusion d'hydroxyde de potassium précédemment fabriquée.

10. Procédé conformément à la revendication 9, la fusion d'hydroxyde de potassium pendant l'ajout présentant une température de l'ordre de 400 à 800°C.

11. Procédé conformément à la revendication 9 ou 10, la matière fondue obtenue une fois l'ajout terminé étant encore mélangée.

12. Procédé conformément à l'une des revendications précédentes, l'étape (3) étant suivie d'une étape (4) comprenant la dissolution du produit de traitement refroidi et solidifié dans l'eau.
